## Europäisches Patentamt
## European Patent Office
## Office européen des brevets

(11) Veröffentlichungsnummer: **0 002 282**
**B1**

(12) **EUROPÄISCHE PATENTSCHRIFT**

(45) Veröffentlichungstag der Patentschrift: **26.08.81**

(51) Int. Cl.³: **C 01 B 25/40**

(21) Anmeldenummer: **78101544.1**

(22) Anmeldetag: **04.12.78**

(54) Verfahren zur Herstellung von Natriumtripolyphosphat.

(30) Priorität: **05.12.77 DE 2754020**

(43) Veröffentlichungstag der Anmeldung:
**13.06.79 Patentblatt 79/12**

(45) Bekanntmachung des Hinweises auf die Patenterteilung:
**26.08.81 Patentblatt 81/34**

(84) Benannte Vertragsstaaten:
**BE CH DE FR GB NL**

(56) Entgegenhaltungen:
**BE - A - 663 349**
**DE - A - 2 522 220**
**DE - B - 1 082 582**
**DE - C - 379 295**
**FR - A - 1 510 681**
**US - A - 916 354**

(73) Patentinhaber: **HOECHST AKTIENGESELLSCHAFT**
**Postfach 80 03 20**
**D-6230 Frankfurt/Main 80 (DE)**

(72) Erfinder: **v. Schenk, Raban, Dr.**
**Alleestrasse 42**
**D-5030 Hürth (DE)**
Erfinder: **Eegdeman, Cent Maarten**
**Gerrit van de Veenstraat 12**
**Middelburg (NL)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Verfahren zur Herstellung von Natriumtripolyphosphat

Die vorliegende Erfindung betrifft ein Verfahren zur Herstellung von Natriumtripolyphosphat aus Naßverfahrensphosphorsäuren, die bis zu dem entsprechenden Na:P — Molverhältnis neutralisiert und von Gehalten an $P_2O_5$ von weniger als 20 Gewichts% auf 27 bis 32 Gewichts%, vorzugsweise 30 bis 31 Gewichts%, aufkonzentriert worden sind. Dabei werden die erhaltenen Orthophosphatlösungen oder -suspensionen, die Verunreinigungen organischer Art enthalten, in Gegenwart von Oxidationsmitteln in einer einzigen Verfahrensstufe in einem mit Brenngasen beheizten Sprühturm bei Temperaturen zwischen 300 und 500°C versprüht.

Phosphorsäuren, die nach dem "nassen" Aufschlußverfahren aus Rohphosphaten und Schwefelsäure gewonnen und nach den üblichen Reinigungsverfahren gereinigt worden sind, besitzen in der Regel dann noch einen gewissen Gehalt an oxidierbaren organischen Verunreinigungen, der bis zu 3 Gewichts%, bezogen auf $P_2O_5$, betragen kann. Verwendet man derartige Naßphosphorsäure zur Herstellung von Alkalipolyphospaten, so bleiben von diesen Vereinigungen organischer Art in den Fertigprodukten verschiedene Zersetzungsprodukte zurück, die den Weißgrad der Polyphosphate beeinflussen. Im allgemeinen ist der Weißgrad dieser Produkte deutlich geringer als der von Salzen, die aus auf elektrothermischem Wege gewonnener Phosphorsäure hergestellt wurden.

Es ist daher bereits seit langem bekannt, bei der thermischen Kondensation von Phosphaten zu Pyrophosphaten, den Ausgangsprodukten so viel Salpetersäure zuzusetzen, wie zur Entfernung der organischen Verunreinigungen erforderlich ist (DE-C-379 295).

Ferner ist bekannt, bei der Herstellung von Alkalitripolyphosphat dem Ausgangsphosphatgemisch mindestens 1 Gewichts% eines oder mehrerer Nitrate zuzusetzen, wodurch die Kondensation katalysiert wird (DE-C-965 126).

Auch wurden schon, zur Herstellung von Tripolyphosphaten mit geringem Schüttgewicht bei gleichzeitiger Oxidation von reduzierend wirkenden Substanzen, beim Sprühtrocknen von organische Verunreinigungen enthaltenden Orthophosphatlösungen oder -suspensionen, letztere so mit einer Oxidationsmittellösung zusammengebracht, daß deren Kontaktzeit mit dem Orthophosphat bis zum Augenblick des Versprühens weniger als 1 Sekunde betrug (DE-C-1 567 632).

Nach diesen bekannten Arbeitsweisen erhält man, wie aus der DE-C-965 126 ersichtlich, das Natriumtripolyphosphat in der sogenannten Tieftemperaturmodifikation, die nach bisheriger Auffassung der Fachwelt allein für die langsame Hydratation von Natriumtripolyphosphat verantwortlich ist, wenn dieses mit Wasser in Verbindung gebracht wird.

Da Natriumtripolyphosphat in der Hauptsache als Waschmittelkomponente industriell eingesetzt wird, ist sein Hydratationsverhalten — neben seinem Weißgrad und Schüttgewicht — von ganz besonderer Bedeutung. Moderne Waschmittel werden durch Sprühtrocknung von einem wässerigen Brei (Slurry) hergestellt, der die organischen und anorganischen Waschmittelkomponenten — darunter auch das Natriumtripolyphosphat — enthält.

Unvollständige Hydratation des Builders Tripolyphosphat im Slurry führt zu schlechten Fließ- und Lagereigenschaften des fertigen Waschmittels. Eine zu langsame Hydratation des Tripolyphosphates vermindert die Kapazitätsauslastung der Anlagen, während eine zu rasche Hydratation zu unzulässig hoher Viskosität des Slurries führt. Damit wird ersichtlich, daß eine kontrollierte Hydratation des Natriumtripolyphosphates ein Schlüsselfaktor für die Herstellung eines guten Waschmittels ist. In diesem Zusammenhang ist die Messung der Hydration von Natriumtripolyphosphat von großer Bedeutung.

Zur Messung des Ablaufs der Hydratation von Natriumtripolyphosphat sind viele Verfahren vorgeschlagen worden, von denen der sogenannte Hydratationstest (ROH) — zurückgehend auf C—Y.SHEN und J. S. METCALF, Ind. & Eng. Chem. Prod. Res. Dev. 4 (1965) 107 — am bekanntesten ist. Bei diesem Test wird die Temperatur als Funktion der Zeit registriert, nachdem 150 g Natriumtripolyphosphat zu einer 80°C warmen Lösung von 50 g Natriumsulfat in 200 g destilliertem Wasser gegeben wurde. Natriumtripolyphosphat mit geeigneten Hydratationseigenschaften führt im Test zu einer Temperaturerhöhung nach einer Minute auf 81 bis 83°C und nach fünf Minuten auf 90 bis 92°C, d.h. zu einer Temperaturdifferenz von 7 bis 11°C.

Im Gegensatz zur in Fachreisen vorherrschenden Meinung hat sich gezeigt, daß das Hydratationsverhalten von in einem einstufigen Sprühverfahren hergestellten Natriumtripolyphosphat nicht allein von seinem jeweiligen Gehalt an Phase I beziehungsweise Phase II, sondern auch von seiner Korngröß3 abhängig ist, wie aus der nachfolgenden Tabelle für in einzelne Kornfraktionen gesiebte Produkte ersehen werden kann.

TABELLE

| Siebfraktion | Probe 1 | | | Probe 2 | | |
|---|---|---|---|---|---|---|
| | ROH—Wert nach 1 min | ROH—Wert nach 5 min | Phase I Gew% | ROH—Wert nach 1 min | ROH—Wert nach 5 min | Phase I Gew% |
| > 0,8 mm | 82,6 | 93,3 | 10 | 85,2 | 88,9 | 40 |
| 0,8 — 0,4 mm | 83,4 | 93,9 | 14 | 86,5 | 91,4 | 36 |
| 0,4 — 0,2 mm | 84,0 | 94,8 | 11 | 86,5 | 91,6 | 33 |
| 0,2 — 0,1 mm | 85,9 | 94,6 | 12 | 86,7 | 92,6 | 30 |
| 0,1 — 0,05 mm | 88,3 | 95,6 | 10 | 87,4 | 93,6 | 25 |
| 0,05 mm | 91,7 | 96,9 | 13 | 89,7 | 95,0 | 20 |
| Ausgangsmaterial | 85,2 | 92,4 | 11 | 86,9 | 92,5 | 29 |

3

Aus dieser Tabelle geht hervor, daß bei abnehmender Korngröße der Siebfraktionen, trotz sinkenden Anteils an Phase I (Hochtemperaturmodifikation), die Hydrationsgeschwindigkeit (ROH-Wert) ansteigt.

Daß der Einfluß der Korn- bzw. Oberflächengröße auf die Hydrationsgeschwindigkeit größer als der des Phase-I-Gehaltes ist, geht auch daraus hervor, daß bei einer Aufmahlung einer Grobfraktion (> 0,8 mm, Phase I 40 Gew%, ROH-Wert 1 min, 85,2; ROH-Wert 5 min, 88,9) zu größer Feinheit (0,2—0,1 mm), das feinere Produkt bei gleich gebliebenem Phase-I-Gehalt das Hydratationsverhalten (ROH 1 min, 86,7; ROH 5 min, 92,6) der abgesiebten Fraktion gleicher Korngröße mit niederem Phase I-Gehalt (30 Gewichts%) aufweist.

Werden Natriumorthophosphatlösungen oder -suspensionen, die Verunreinigungen organischer Herkunft bis zu 3 Gewichts%, bezogen auf $P_2O_5$ enthalten, bis zu 5 Gewichts% Oxidationsmittel wie z.B. $NaNO_3$ oder $NaClO_3$, bezogen auf Gewichts% $P_2O_5$ zugesetzt und versprüht, so wird eine unzureichende Hydratation des Salzes und ein Ansteigen des Gehaltes an Natriumpyrophosphat im Salz beobachtet.

Im besonderen Maße treten diese Erscheinungen auf, wenn, in den Sprühtürmen anstelle von CO als Brennergas Erdgas verwendet wird.

Aufgabe der vorliegenden Erfindung war es, einen Weg zur Herstellung von Natriumtripolyphosphat zu finden, welches ein zur Bereitung von Waschmittelslurries geeignetes Hydratationsverhalten zeigt — d.h. von einem Natriumtripolyphosphat, das im Hydratationstest (ROH) zwischen dem nach 1 Minute und dem nach 5 Minuten gemessenen Temperaturwert eine Differenz von mindestens 7°C bewirkt — wenn als Ausgangsprodukte Natriumorthophosphatlösungen oder -suspensionen eingesetzt werden, die durch Neutralisation von Naßverfahrensphosphorsäure erhalten wurden, welche einen $P_2O_5$-Gehalt von weniger als 20 Gewichts% sowie organische verunreinigungen bis zu ca. 3 Gewichts%, bezogen auf $P_2O_5$, enthält, und auf einen $P_2O_5$-Gehalt von 27 bis 32 Gewichts% aufkonzentriert wurden.

Überraschenderweise wurde gefunden, daß sich diese Aufgabe in höchst einfacher Weiser lösen läßt, wenn man die Oxidationsmittel zur Beseitigung der organischen Verunreinigungen bereits den Naßverfahrensphosphorsäuren vor deren Aufkonzentrierung und Neutralisierung zusetzt.

Vorteilhafterweise setzt man dabei ein Oxidationsmittel in Mengen von 0,5 bis 2 Gewichts%, vorzugsweise von 1 Gewichts%, bezogen auf $P_2O_5$, ein.

Eingesetzt können Naßverfahrensphosphorsäuren werden, die bis zu 3 Gewichts%, bezogen auf $P_2O_5$, an Verunreinigungen organischer Herkunft enthalten.

Als Oxidationsmittel eignen sich insbesondere Nitrate, Chlorate und/oder Peroxide, in Form von Salzen oder Lösungen.

Erfindungsgemäß kann als Brennergas im Sprühturm Erdgas eingesetzt werden, ohne daß der in diesem Falle sonst besonders starke Anstieg des Gehaltes an Natriumpyrophosphat im Endprodukt festgestellt werden muß.

### Beispiel 1 (Vergleichsbeispiel)

Eine auf thermischem Wege hergestellte Phosphorsäure ohne Verunreinigungen organischer Art wurde mit Natronlauge so neutralisiert, daß das Molverhältnis $Na_2O : P_2O_5 = 5:3$ war und der Gehalt an $P_2O_5$ in der Lösung etwa 30% betrug. In einem Sprühturm wurde diese etwa 90°C heiße Salzlösung in bekannter Weise mit CO als Brennergas versprüht, wobei die Abgastemperatur etwa 380°C betrug. Das so entstandene Natriumtripolyphosphat war frei von Verunreinigungen und führte nach Vermahlung im Hydratationstest zu den Temperaturerhöhungen von 81 bis 82°C nach einer Minute und zu 91 bis 92°C nach fünf Minuten. Der Tripolyphosphatgehalt im Salz betrug 98%, der Weißgrad, gemessen gegen MgO, p.A., betrug 96%.

### Beispiel 2 (Vergleichsbeispiel)

In Wiederholung des Beispiels 1 erfolgte die Versprühung unter Verwendung von Erdgas als Energiequelle ebenfalls bei einer Abgastemperatur von etwa 380°C. Das entstandene Salz unterschied sich von dem nach Beispiel 1 erhaltenen nicht.

### Beispiel 3 (Vergleichsbeispiel)

Einer nach dem Naßaufschlußverfahren hergestellten und Verunreinigungen organischer Art in Höhe von 0,1 Gewichts%, bezogen auf $P_2O_5$, enthaltenden Phosphorsäure (17% $P_2O_5$) wurde nach Aufkonzentrierung und Neutralisation mit Natronlauge (Verhältnis $Na_2O : P_2O_5 = 5:3$ und etwa 30% $P_2O_5$) ein Gewichts% $NaNO_3$, bezogen auf $P_2O_5$, zugefügt und die etwa 90°C heiße Lösung in bekanner Weise unter Verwendung von CO als Brennergas versprüht. Die Abgastemperatur betrug wieder etwa 380°C. Nach Vermahlung wurden für das so hergestellte Salz im Hydratationstest Temperaturhöhungen von 81 bis 82°C nach einer Minute und von nur 87 bis 88°C nach fünf Minuten festgestellt. Der Gehalt an Tripolyphosphat im Salz betrug 95 bis 96% und der Weißgrad wurde zu 89 bis 90% gemessen.

# 0 002 282

### Beispiel 4 (Vergleichsbeispiel)

In Wiederholung des Beispiels 3 erfolgte die Versprühung unter Verwendung von Erdgas als Brennergas ebenfalls bei einer Abgastemperatur von etwa 380°C. Das entstandene Salz erreichte nach Vermahlung im Hydratationstest Temperaturerhöhungen von 84 bis 86°C nach einer Minute und von 88 bis 89°C nach fünf Minuten. Der Gehalt an Tripolyphosphat im Salz betrug 93 bis 94%, der Weißgrad erreichte nur Werte um 90%.

### Beispiel 5 (erfindungsgemäße Arbeitsweise)

Einer nach dem Naßaufschlußverfahren hergestellten Phosphorsäure (17% $P_2O_5$) mit organischen Verunreinigungen in Höhe von 0,2 Gewichts%, bezogen auf $P_2O_5$, wurde vor ihrer Aufkonzentrierung und Neutralisation ein Gewichts% $NaNO_3$, bezogen auf $P_2O_5$, zugefügt. Nach der Neutralisation mit Natronlauge (Verhältnis $Na_2O$: $P_2O_5$ = 5:3 und etwa 30% $P_2O_5$) wurde die etwa 90°C heiße Salzlösung in bekannter Weise unter Verwendung von CO als Brennergas bei einer Abgastemperatur von etwa 380°C versprüht. Nach Vermahlung wurden für das Salz im Hydratationstest Temperaturerhöhungen von 81 bis 82°C nach einer Minute und von 90 bis 92°C nach fünf Minuten festgestellt. Der Gehalt an Tripolyphosphat im Salz betrug 97% bei einem Weißgrad von 94%.

### Beispiel 6 (erfindungsgemäße Arbeitsweise)

In Wiederholung des Beispiels 5 mit Erdgas als Brennergas wurde durch die erfindungsgemäße Zugabe des Oxidationsmittels vor der Aufkonzentrierung der im $P_2O_5$-Gehalt dünnen Naßphosphorsäure im Vergleich zu Beispiel 4 wesentliche Besserung erreicht. Das erfindungsgemäß hergestellte Salz zeigte im Hydratationstest Temperaturerhöhungen von 82 bis 83°C nach einer Minute und von 90 bis 91°C nach fünf Minuten bei einem Gehalt an Tripolyphosphat im Salz von 97% und einem Weißgrad von 94%.

### Beispiel 7 (erfindungsgemäße Arbeitsweise)

In Wiederholung des Beispiels 6 mit Erdgas als Brennergas wurde durch Zugabe von Wasserstoffperoxid als Oxidationsmittel in einer Menge von 0,5 Gewichts%, bezogen auf $P_2O_5$, vor der Aufkonzentrierung der Naßphosphorsäure im Vergleich zu Beispiel 6 eine weitere Verbesserung erreicht. Das so hergestellte Salz zeigt im Hydratationstest Temperaturerhöhungen von 80 bis 81°C nach einer Minute und von 90 bis 92°C nach fünf Minuten bei einem Gehalt an Natriumtripolyphosphat im Salz von 97% und einem Weißgrad von 94 bis 95%.

### Patentansprüche

1. Verfahren zur Herstellung von Natriumtripolyphosphat unter Verwendung von Oxidationsmitteln, aus Naßverfahrensphosphorsäuren, welche Verunreinigungen organischer Art un $P_2O_5$-Gehalte von weniger als 20 Gew% enthalten, indem man die Säuren bis zu dem Na:P Molverhältnis, welches dem Natriumtripolyphosphat entspricht, neutralisiert und die dabei erhaltenen Orthophosphatlösungen oder -suspensionen in einer einzigen Verfahrensstufe in einem mit Brenngasen beheizten Sprühturm bei Temperaturen zwischen 300 und 500°C versprüht, dadurch gekennzeichnet, daß man zur Herstellung eines zur Bereitung von Waschmittelslurries geeigneten Natriumtripolyphosphates, welches im Hydratationstest (ROH) zwischen dem nach 1 Minute und dem nach 5 Minuten gemessenen Temperaturwert eine Differenz von mindestens 7°C bewirkt, die Oxidationsmittel bereits den Naßverfahrensphosphorsäuren zusetzt, dann letztere bis zu einem $P_2O_5$-Gehalt von 27 bis 32 Gew% konzentriert und erst anschließend die genannten Säuren bis zum erforderlichen Na:P Molverhältnis neutralisiert.

2. Verfahren nach Anspruch 1, dadurch gekennzeichnet daß man den Naßverfahrensphosphorsäuren zwischen 0,5 und 2 Gewichts%, bezogen auf $P_2O_5$, an Oxidationsmitteln zusetzt.

3. Verfahren nach Anspruch 2, dadurch gekennzeichnet, daß man den Naßverfahrensphosphorsäuren 1 Gewichts%, bezogen auf $P_2O_5$, an Oxidationsmitteln zusetzt.

4. Verfahren nach einem der Ansprüche 1 bis 3, dadurch gekennzeichnet, daß Naßverfahrensphosphorsäuren eingesetzt werden, deren Gehalt an Verunreinigungen organischer Herkunft bis zu 3 Gewichts%, bezogen auf $P_2O_5$, beträgt.

5. Verfahren nach einem der Ansprüche 1 bis 4, dadurch gekennzeichnet, daß als Oxidationsmittel Nitrate, Chlorate oder Peroxide als Salze oder als Lösungen eingesetzt werden.

6. Verfahren nach einem der Ansprüche 1 bis 5, dadurch gekennzeichnet, daß man als Brenngas im Sprühturm Erdgas einsetzt.

### Claims

1. Process for making sodium tripolyphosphate with the use of oxidants from wet-processed phosphoric acids containing organic impurities and less than 20 weight % of $P_2O_5$ by neutralizing the acids to a molar ratio of Na:P which corresponds to that desired for the sodium tripolyphosphate, and subjecting the resulting orthophosphate solutions or suspensions to a one-step spraying operation inside a fuel gas-heated spray tower at temperatures between 300 and 500°C, wherein, in order to

5

produce sodium tripolyphosphate which is suitable for the preparation of detergent slurries and, in the hydration test (ROH), causes the temperature values measured after 1 minute and 5 minutes, respectively, to differ from one another by at least 7°C, the oxidants are added to the wet-processed phosphoric acids, the latter are concentrated to establish a $P_2O_5$-content of 27 to 32 weight % therein, and subsequently neutralized to the necessary molar ratio or Na.P.

2. Process as claimed in claim 1, wherein the oxidants are added to the wet-processed phosphoric acids in proportions between 0.5 and 2 weight %, based on $P_2O_5$.

3. Process as claimed in claim 2, wherein the oxidants are added to the wet-processed phosphoric acids in a proportion of 1 weight %, based on $P_2O_5$.

4. Process as claimed in any of claims 1 to 3, wherein the wet-processed phosphoric acids used contain up to 3 weight %, based on $P_2O_5$, of organic impurities.

5. Process as claimed in any of claims 1 to 4, wherein the oxidants are nitrates, chlorates or peroxides which are used in the form of salts or solutions.

6. Process as claimed in claim 1, wherein the fuel gas used in the spray tower is natural gas.

## Revendications

1. Procédé de préparation de tripolyphosphate de sodium avec utilisation d'oxydants à partir d'acides phosphoriques obtenus par le procédé humide, contenant des impuretés d'origine organique et moins de 20% en poids de $P_2O_5$, par neutralisation des acides jusqu'au rapport molaire Na/P recherché pour le tripolyphosphate de sodium, puis pulvérisation des solutions ou suspensions d'orthophosphate en un seul stade à des températures comprises entre 300 et 500°C, dans une tour de pulvérisation chauffée à l'aide de gaz combustibles, ce procédé étant caractérisé en ce que, pour obtenir un tripolyphosphate de sodium qui est utile dans la préparation de pâtes détersives et qui, dans l'essai d'hydratation (ROH), provoque une différence de température d'au moins 7°C entre deux mesures de températures effectuées après 1 min et 5 min, respectivement, on ajoute déjà les oxydants aux acides phosphoriques du procédé humide, puis on concentre ces derniers pour établir une teneur en $P_2O_5$ de 27 à 32% en poids et on ne concentre qu'ensuite les acides jusqu'au rapport molaire Na/P nécessaire.

2. Procédé selon la revendication 1, caractérisé en ce que les oxydants sont ajoutés aux acides phosphoriques du procédé humide à raison de 0,5 à 2% en poids, par rapport au $P_2O_5$.

3. Procédé selon la revendication 2, caractérisé en ce que les oxydants sont ajoutés aux acides phosphoriques du procédé humide à raison de 1% en poids, par rapport au $P_2O_5$.

4. Procédé selon l'une quelconque des revendications 1 à 3, caractérisé en ce que l'on utilise des acides phosphoriques du procédé humide contenant jusqu'à 3% en poids par rapport au $P_2O_5$ d'impuretés d'origine organique.

5. Procédé selon l'une quelconque des revendications 1 à 4, caractérisé en ce que l'on utilise comme oxydants des nitrates, chlorates ou peroxydes sous forme de sels ou de solutions.

6. Procédé selon l'une quelconque des revendications 1 à 5, caractérisé en ce que le gaz combustible utilisé dans la tour de pulvérisation est le gaz naturel.